Europäisches Patentamt

European Patent Office

Office européen des brevets

(11) Publication number: **0 323 879**
**A1**

# EUROPEAN PATENT APPLICATION

(21) Application number: **89300002.6**

(22) Date of filing: **03.01.89**

(51) Int. Cl.⁴: **F 16 L 11/11**
**B 29 D 23/00**

(30) Priority: **07.01.88 GB 8800274**

(43) Date of publication of application:
**12.07.89 Bulletin 89/28**

(84) Designated Contracting States:
**CH DE FR GB IT LI SE**

(71) Applicant: **STANDARD HOSE LIMITED**
**Owler Ings Mill Owler Ings Road**
**Brighouse West Yorkshire HD6 1EJ (GB)**

(72) Inventor: **Whitworth, Barrie Finbar c/o Standard Hose Ltd.**
**Owler Ings Mill Owler Ings Road**
**Brighouse West Yorkshire HD6 1EJ (GB)**

(74) Representative: **Wharton, Peter Robert et al**
**Urquhart-Dykes & Lord Alliance House 29-31 Kirkgate**
**Bradford West Yorkshire, BD1 1QB (GB)**

(54) Hose pipe.

(57) A flexible hose (10) comprises a helically convoluted tube (12) wherein the internal convolutions (16) are flat in section and whose axial width (Y) is between two and ten times that (X) of the external convolutions (14), no wire being present. The construction of the invention dispenses with the need for a profiled wire to be present. The invention is based on the discovery that, even with the relatively large axial width of the flat internal convolutions, setting of the tube material is sufficient in itself to stabilise the configuration and the profiled wire can be dispensed with, especially with tubes of smaller diameter (e.g. from 5 mm to 50 mm in diameter). Very light weight and flexible hoses result.

Fig 2

EP 0 323 879 A1

**Description**

## HOSE PIPE

This invention relates to hose pipes, in particular to flexible convoluted hose pipes.

Convoluted, flexible, plastics materials hose pipes such as those described in our UK Patent No. 1543586 are increasingly being employed where it is necessary to transfer fluid through a flexible line, for example when loading or unloading fluid from tankers. Such hoses combine lightness in weight with flexibility and high resistance to kinking, crushing, and vacuum.

A longitudinal section through the hose wall shows that the hose tube has a sinusoidally curved profile. When fluid is flowing through the tube the shape of the wall causes eddy currents to form and, in turbulent flow conditions, these can be severe and create a disturbance of the flow through the hose. In certain cases, with low viscosity fluids such as gasses, resonance can occur at specific flow rates and some of the energy loss exhibits itself in sound waves which can, when in the audible range of frequencies, be objectionable in a working environment.

The problem can be partially overcome by reducing the height and pitch of the convolutions in the hose. This solution renders the tube less capable of withstanding severe bending without risk of kinking and also such constructions are less capable of withstanding vacuum without collapse owing to the shallowness of the convolution form.

Our European patent publication No. 0143659 provides a solution to this problem by providing a reinforced helically convoluted flexible hosepipe which comprises a helically convoluted tube having, in the roots of the external convolutions, an externally wound wire reinforcement, the wire having a flat section and being dimensioned and wound such that the roots of the internal convolutions are flattened and the axial width is between two and ten times that of the external convolutions.

We have now found that an equally advantageous effect can be obtained by an even simpler construction.

In accordance with the present invention there is provided a flexible hose which comprises a helically convoluted tube wherein the internal convolutions are flat in section and whose axial width is between two and ten times that of the external convolutions, no wire being present.

Thus it can be seen that the construction of the invention dispenses with the need for the profiled wire to be present. The invention is based on the surprising discovery that, even with the relatively large axial width of the flat internal convolutions, setting of the tube material is sufficient in itself to stabilise the configuration and the profiled wire can be dispensed with. This finding was unexpected in that it was thought that it was necessary to retain the wire to stabilise the relatively large flat internal convolutions. However, especially with tubes of smaller diameter (e.g. from 5 mm to 50 mm in diameter), the present invention leads to a very light weight and flexible solution to the above problems.

The hose of the invention may be made in accordance with EP-A-0143659, that is by winding with a profiled wire, and then the tube material being heat set or allowed to cold set. After this the wire is removed. Alernatively the hose may be made by other methods, such as methods not involving the winding of a wire: e.g. by forming convolutions of the required shape directly on a heated plastics material tube followed by cooling to set the configuration.

As with our earlier case the term 'wire' includes profiled strips, in particular a flat profiled strip, and while metal 'wire' will normally be used, other materials such as plastics may be employed where appropriate.

The flattened internal convolutions present, on their internal faces, a substantially plain cylindrical surface. By ensuring that the radially outer convolutions are restricted to as small an axial width as possible, turbulent flow can be reduced to a minimum.

The invention will be described further by way of example with reference to the accompanying drawing, in which:

Figure 1 is a partial sectional view through a hose pipe during manufacture; and

Figure 2 is a similar view to figure 1 of the finished article.

Referring to the drawings, it can be seen that a helically convoluted hose pipe generally designated 10 comprises a helically convoluted tube 12 having external and internal convolutions 14 and 16 respectively. The internal convolutions are flat and internally of the hose 10 present a right cylindrical surface.

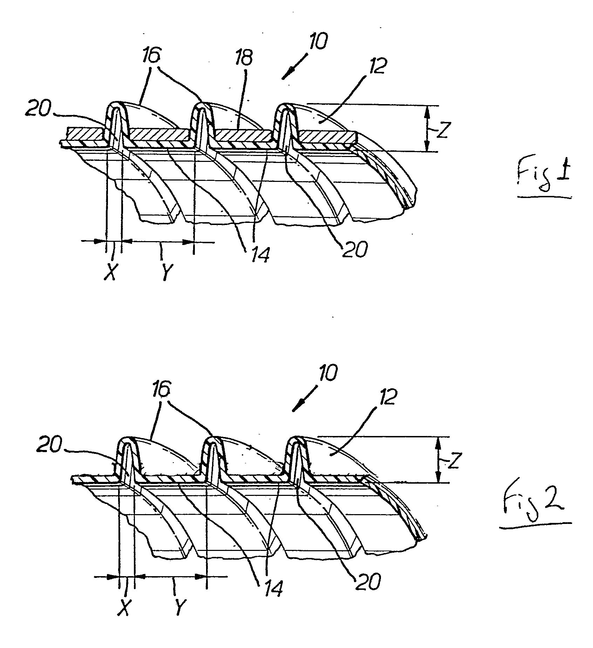

The hose may be produced by winding a flat profiled strip or wire 18 in to the internal convolutions (figure 1) and either heat setting or cold setting the material. The pitch of the winding of the convolutions 14, 16 is chosen in conjunction with the axial width of the wire 18 so that the convolutions 16 are axially compressed so that the internal gap 20 is of the smallest axial extent practicable (the gap 20 is of axial length 'X' in the figure) and is considerably less than the axial length 'Y' of the cylindrical inner surface of the convolutions 14. The wire 18 is then removed leaving the construction as shown in figure 2.

The convolution depth 'Z' is relatively high and thus the hose pipe constructed in accordance with the invention retains its desirable properties of kink resistance, crush resistance, and vacuum resistance. However, it has been found that the generation of eddy currents is considerably reduced with this form of construction and resonance when employed with low viscosity fluids such as gasses is reduced or eliminated.

Thus, the construction of the invention provides a simple and effective solution to the reduction of eddy currents in helically convoluted light weight flexible hoses without sacrifice of the desirable properties of crush resistance, kink resistance or vacuum resistance. The invention is applicable to all forms of hoses of this type but is especially useful in connection with plastics material hoses and in particular with hoses of polytetrafluoroethylene.

As is usual in this field the hose of the invention can be provided with end fittings as desired and may be protected with a woven braid or other form of covering.

**Claims**

1. A flexible hose which comprises a helically convoluted tube wherein the internal convolutions are flat in section and whose axial width is between two and ten times that of the external convolutions, characterised in that no wire is present to stabilise to flattened convolutions.

2. A hose as claimed in claim 1 in which the tube material is set to retain the convolutions.

3. A hose as claimed in aeither of claims 1 or 2 in which the tube is from 5 mm to 50 mm in diameter.

4. A hose as claimed in any of claims 1 to 3 in which the tube is made of polytetrafluoroethylene.

5. A hose as claimed in any of claims 1 to 4 in which the internal convolutions present, on their internal faces, a substantially plain cylindrical internal surface of the hose.

6. A method of making a hose as claimed in claim 1 which comprises winding a helically convoluted tube with a profiled wire, setting the tube material, and removing the wire.

7. A method as claimed in claim 6 in which the tube is heat set or allowed to cold set.

8. A method as claimed in either of claims 6 or 7 in which the convolutions are formed simultaneously with, or immediately before, winding the wire.

9. A method of making a hose as claimed in claim 1 which comprises forming convolutions of the required shape directly on a heated plastics material tube followed by cooling to set the configuration.

Fig 1

Fig 2

| DOCUMENTS CONSIDERED TO BE RELEVANT | | EP 89300002.6 |
|---|---|---|

| Category | Citation of document with indication, where appropriate, of relevant passages | Relevant to claim | CLASSIFICATION OF THE APPLICATION (Int. Cl.4) |
|---|---|---|---|
| X | GB - A - 1 370 679 (FRITZ KIRCHNER UND HERMAN KIRCHNER) <br> * Totality * | 1-3,5 | F 16 L 11/11 <br> B 29 D 23/00 |
| A | US - A - 4 292 113 (HIRATA) <br> * Totality * | 6,7,9 | |
| A | US - A - 4 521 270 (LUPKE) <br> * Totality * | 6,7,9 | |
| D,A | EP - A1 - 0 143 659 (STANDARD HOSE LIMITED) <br> * Totality * | 1,4 | |
| A | AT - B - 347 193 (SEMPERIT AG) <br> * Totality * | 1 | **TECHNICAL FIELDS SEARCHED (Int. Cl.4)** |
| A | GB - A - 1 530 681 (CONTINENTAL GUMMIWERKE AG) <br> * Totality * <br> ---- | 1 | F 16 L 11/00 <br> B 29 C 53/00 <br> B 29 D 23/00 |

The present search report has been drawn up for all claims

| Place of search | Date of completion of the search | Examiner |
|---|---|---|
| VIENNA | 31-03-1989 | SCHUGANICH |